**Europäisches Patentamt**

**European Patent Office**

**Office européen des brevets**

(19)

(11) Veröffentlichungsnummer: **0 149 809**
**B1**

(12) **EUROPÄISCHE PATENTSCHRIFT**

(45) Veröffentlichungstag der Patentschrift:
27.04.88

(51) Int. Cl.⁴: **F 16 B 41/00**

(21) Anmeldenummer: **84115649.0**

(22) Anmeldetag: **17.12.84**

(54) Anordnung zum Sichern einer Verbindung.

(30) Priorität: **19.01.84 DE 3401743**

(43) Veröffentlichungstag der Anmeldung:
**31.07.85 Patentblatt 85/31**

(45) Bekanntmachung des Hinweises auf die Patenterteilung:
**27.04.88 Patentblatt 88/17**

(84) Benannte Vertragsstaaten:
**DE FR GB IT**

(56) Entgegenhaltungen:
**DD-A-71 251**
**GB-A-1 372 745**
**GB-A-2 093 552**
**US-A-3 209 569**
**US-A-3 227 029**
**US-A-4 386 949**

**O. Richter & R.v.Voss "Bauelemente der Feinmechanik", 9. Auflage, VEB Verlag Technik Berlin, Seiten 81-84**
**S. HILDEBRAND "Feinmechanische Bauelemente", 3. Auflage, Carl Hanser Verlag, München-Wien 1978, Seiten 242,243**

(73) Patentinhaber: **Mannesmann Kienzle GmbH, Postfach 1640 Heinrich- Hertz- Strasse, D-7730 Villingen- Schwenningen (DE)**

(72) Erfinder: **Schultze, Hartmut, Oscar Joos- Strasse 1, D-7730 Villingen- Schwenningen (DE)**
Erfinder: **Strohm, Klaus- Peter, Wurstentalstrasse 5, D-7730 Villingen- Schwenningen (DE)**
Erfinder: **Helmschrott Norbert, Wasenstr. 94, D-7730 Villingen- Schwenningen (DE)**

EP 0 149 809 B1

## Beschreibung

Die Erfindung betrifft eine Anordnung zum Sichern einer Verbindung zwischen zwei Bauteilen, beispielsweise einer Gehäusewand und einem an dieser anzubringenden Abdeckung.

Bei einer Vielzahl von Meß- und Registriergeräten werden, teils um die Verschmutzungsgefahr zu verringern und ein gefälligeres Aussehen zu erzielen, im wesentlichen jedoch um unerwünschte Eingriffe zu erschweren, die Zugänge beispielsweise zu Codierschaltern, Steckeranschlüssen oder Baugruppen mit hoher Austauschhäufigkeit sowie für Prüfzwecke und Justiereingriffe vorgesehene kleinere und größere Öffnungen in Zwischenwänden und Montageplatten, auch wenn diese sich im Innern der Geräte befinden, durch geeignete Hauben und Abdeckplatten zusätzlich verblendet bzw. abgesichert.

Bei Großserienfertigung der betreffenden Geräte ist man verständlicherweise bemüht, den Fertigungs-, insbesondere den Montageaufwand derartiger nicht funktionswesentlicher Baumaßnahmen weitestgehend zu reduzieren. Andererseits müssen diese Abdeckungen lösbar befestigt werden, wobei die Befestigungsmittel bei wiederholtem Lösen und wieder Befestigen unverändert wirksam bleiben sollen. Außerdem muß auch bei Geräten, die rauhen Betriebsbedingungen ausgesetzt sind, ausgeschlossen sein, daß durch mangelhafte bzw. unangemessene Befestigung dieser Abdeckungen Funktionsstörungen auftreten. Hinzu kommt, daß in den meisten Fällen ein unberechtigtes Lösen der Abdeckung nachweisbar sein soll, d.h. die Befestigung der Abdeckung zusätzlich in geeigneter Weise plombiert werden muß.

Werden beispielsweise, um den Fertigungs- und Montageanforderungen gerecht zu werden, werkzeuglos montierbare Steck-Schiebe-Verbindungen oder reine Schiebeverbindungen vorgesehen, deren Elemente unmittelbar an den zu verbindenden Bauteilen spritzgußtechnisch anformbar sind, so machen die übrigen genannten Bedingungen für derartige Verbindungen geeignete, d.h. der gewählten Fertigungsoptimierung angepaßte, also mit möglichst geringem Aufwand anbringbare und lösbare Sicherungsmaßnahmen erforderlich. Gleiches gilt auch für zu treffende Plombiermaßnahmen. Dabei soll zwar ein leichtes Lösen der Verbindung gewährleistet sein, das Lösen muß aber, um es nachweisbar zu machen, eine nicht mehr reparierfähige Beschädigung beispielsweise eines zusätzlichen, jedoch leicht ersetzbaren Teiles zur Folge haben.

Die Lösung dieser Aufgaben - einerseits Lagesicherung, andererseits Plombierung sieht vor, daß ein vorzugsweise zylinderförmiges Sicherungselement vorgesehen ist, daß an der Abdeckung eine dem Sicherungselement zugeordnete Fassung ausgebildet ist und daß an der Gehäusewand ein während des Zusammenfügens der beiden Bauteile in die Fassung eingreifendes Sperrglied derart angeformt ist, daß die Fassung erst in der Endstellung der Renkverbindung für das Einsetzen des Sicherungselementes frei ist.

Ein bevorzugtes Ausführungsbeispiel ist dadurch gekennzeichnet, daß für Fassung und Sicherungselement eine aus der DE-A-31 06 543 bekannte Plombiervorrichtung mit einer vorzugsweise zylindrischen Öffnung mit mehreren in die Öffnung hineinragenden Rastnasen und einem mit einer den Rastnasen zugeordneten, umlaufenden Nut versehenen Käppchen Anwendung findet.

Die gefundene Lösung stellt eine sozusagen plombierfähige Lagesicherung für eine Verbindung zwischen zwei Bauteilen dar. Ihr Vorteil ist, abgesehen davon, daß eine überraschend niedrige Bauhöhe erzielbar ist, insbesondere darin zu sehen, daß ein und dasselbe Element der Verbindung sowohl als Riegel bzw. Anschlag dient, indem es die eine Bewegungsrichtung der durch Verschieben der Bauteile wirksam werdenden Verbindung blockiert und somit die Renkverbindung sichert, als auch gemäß dem bevorzugten Ausführungsbeispiel als Plombe wirksam sein kann, anders betrachtet, eine Plombe gleichzeitig Befestigungs- bzw. Sicherungselement darstellt, also verglichen beispielsweise mit einer plombierten Verschraubung eine Doppelfunktion ausübt. Dabei ist die Montage des Sicherungselementes, da keine komplizierten, symmetrischen Konturen zwischen Gehäusewand und Abdeckung in Übereinstimmung gebracht werden müssen und das Sicherungselement rotationssymmetrisch ausgebildet ist, eine einfache und werkzeuglose Montage des Sicherungselementes gewährleistet. Auch ist, indem die Fassung des Sicherungselementes lediglich in der Abdeckung ausgebildet ist, der formtechnische Aufwand außergewöhnlich gering. Vorteilhaft ist ferner, daß sich ein ohnehin in dem betreffenden Gerät möglicherweise mehrfach verwendetes Plombierelement als Sicherungselement anwenden läßt.

Im folgenden sei die Erfindung anhand der beigefügten Zeichnungen näher erläutert. Es zeigen

FIG. 1 eine Prinzipdarstellung,

FIG. 2 perspektivisch gestaffelte Draufsichten der beteiligten Bauteile einer beispielsweisen Anordnung gemäß der Erfindung,

FIG. 3 eine Schnittdarstellung der Anordnung gemäß FIG. 2,

FIG. 4 eine Ausführungsvariante mit verbesserter Verriegelungs- und Plombierwirkung.

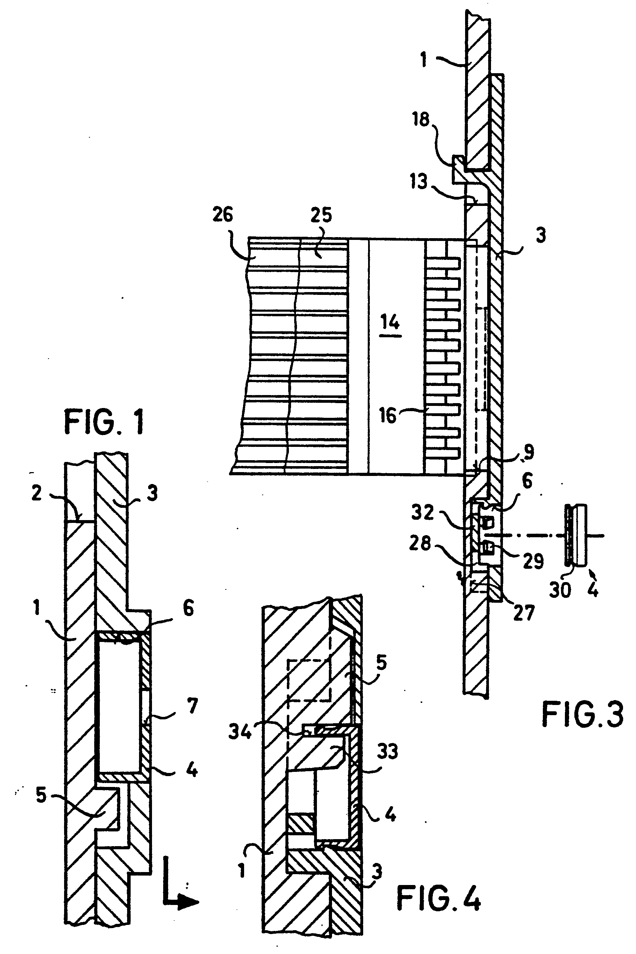

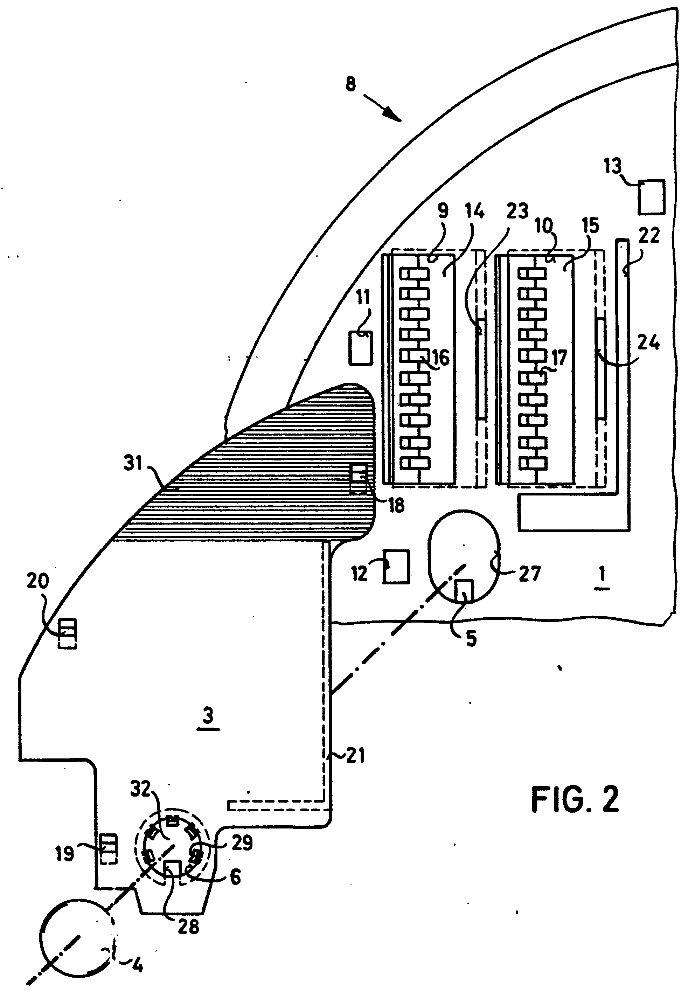

Die Prinzipdarstellung FIG. 1 zeigt eine einer Gehäusewand 1, in welcher eine abzudeckende Öffnung 2 vorgesehen ist, zugeordnete Abdeckung 3. Letztere ist mittels geeigneter, jedoch, weil nicht erfindungswesentlich, nicht gezeichneter Verbindungsmittel an der Gehäusewand 1 gehalten. Das Lösen der

Abdeckung 3 von der Gehäusewand 1, welches eine Verschiebe- und Aushebebewegung gemäß Pfeil erfordert, wird durch ein Sicherungselement 4, dem ein an der Gehäusewand 1 ausgebildetes Sperrglied 5 zugeordnet ist, verhindert. Dabei ist das Sicherungselement 4, ein im wesentlichen zylindrisches Käppchen mit einem geringen Übermaß, in einer in der Abdeckung 3 ausgebildeten und als Fassung 6 dienenden Öffnung angeordnet. Wie ersichtlich ist, kann das Sicherungselement 4, das bei geeigneter Werkstoffwahl auch als Vollkörper ausgebildet sein kann, jedoch erst dann in die Fassung 6 eingesetzt werden, wenn sich die Abdeckung 3 in der Verbindungsposition befindet. Wenn keine Plombierfunktion gefordert ist, dient eine in dem Sicherungselement 4 vorgesehene Öffnung 7 dem zerstörungsfreien Entfernen, so daß das Sicherungselement 4 wieder verwendet werden kann.

In dem in den FIG. 2 und 3 dargestellten Ausführungsbeispiel bildet die Gehäusewand 1 eine Zwischenwand eines Gerätegehäuses 8. In der Zwischenwand ausgebildete Durchbrüche 9 und 10 sowie Öffnungen 11, 12 und 13 dienen einerseits dem Zugang zu hinter der Zwischenwand angeordneten Codierschalterblöcken 14 und 15 bzw. zu deren Schalthebeln, von denen jeweils einer mit 16 bzw. 17 bezeichnet ist, andererseits dem Durchgreifen von an der Abdeckung 3 angeformten Riegeln 18, 19 und 20, die somit zusammen mit den Öffnungen 11, 12 und 13 die Verbindungsmittel zwischen der Gehäusewand 1 und der Abdeckung 3 beim Zusammenfugen von Abdeckung 3 und Gehäusewand 1 und zur Vermeidung einer Überlastung der Riegel 18, 19 und 20 an der Zwischenwand eine einer an der Abdeckung 3 ausgebildeten Rippe 21 zugeordnete Vertiefung 22 vorgesehen. Schlitze 23 und 24 dienen, was lediglich am Rande erwähnt sei, der Halterung von den Codierschalterblöcken 14 und 15 zugeordneten Leiterplatten 25 und 26, während mit 27 eine der in der Abdeckung 3 tiefgezogen ausgebildeten Fassung 6 zugeordnete Vertiefung bezeichnet ist. Entsprechend des in die Vertiefung hineinragenden, fingerförmig ausgebildeten Sperrgliedes 5 ist in der Fassung 6 ein Schlitz 28 vorgesehen. Mehrere in die Fassung 6 hineinragende Rastnasen, von denen eine mit 29 bezeichnet ist, sowie eine an dem Sicherungselement 4 umlaufend ausgebildete Nut 30 dienen dem rastbaren Verbinden des Sicherungselementes 4 mit der Abdeckung 3 und machen die Anordnung plombierfähig, da das bei dieser Ausführungsform an seiner Stirnseite nicht mit einer Öffnung sondern mit geeigneten Plombiermerkmalen versehene Sicherungselement 4 nach erfolgter, im übrigen werkzeuglos durchführbarer Montage nicht mehr zerstörungsfrei von der Abdeckung 3 getrennt werden kann. Der Vollständigkeit halber sei noch erwähnt, daß die Abdeckung 3 mit einer Riefelung 31 versehen ist, womit das erforderliche Verschieben beim Ineingriffbringen und beim Lösen der Verbindung erleichtert wird und daß die gefundene Lösung gemäß den FIG. 2 und 3 zwischen der Abdeckung 3 und dem Sicherungselement 4 eine ebenflächige und somit auch ästhetisch vorteilhafte Anordnung gestattet, wobei der Boden 32 der Fassung 6 beim Einrasten des Sicherungselementes 4 als Anschlag dient. Im übrigen läßt sich die Bauhöhe verringern, wenn, wie dies FIG. 1 zeigt, auf den Boden 32 verzichtet wird und die Gehäusewand 1 den Anschlag bildet. Zur Verdeutlichung der konstruktiven Problematik sei an dieser Stelle darauf hingewiesen, daß die erfindungsgemäße Anordnung an außergewöhnlich dünnwandigen Bauteilen in einem Maßbereich von 1 bis 2 mm anwendbar ist, obwohl sich die Forderungen nach Ebenflächigkeit von Sicherungselement 4 und Abdeckung 3 einerseits sowie nach einer Anschlagfunktion für das Sicherungselement 4 und einer wegen des Staubschutzes nicht durchbrochenen Gehäusewand 1 andererseits widersprechen.

Erwähnt sei ferner, daß die Abdeckung 3 zusätzlich oder ausschließlich die Funktion haben kann, als plombierfähiges Verriegelungselement zu dienen, indem sie in geeignete Konturen beispielsweise an aus der Gehäusewand 1 herausragenden Wellen oder steckbaren Bauteilen eingreift und in dieser Lage in der beschriebenen Weise gesichert wird.

Die Ausführungsvariante FIG. 4 zeigt außerdem, daß das als Rippe an der Gehäusewand 1 ausgebildete Sperrglied 5 soweit hochgezogen ist, daß es beim Versuch, die Abdeckung 3 zu verschieben, ohne das Sicherungselement 4 zuvor zu lösen, an nahezu der gesamten Höhe des Sicherungselementes 4 angreift. Durch diese Maßnahme wird vermieden, daß lediglich der relativ dünne, zylindrische Wandabschnitt des Sicherungselementes 4 verformt wird oder einreißt und somit eine Plombierfunktion überhaupt nicht gegeben ist. Eine weitere Verbesserung ist in dieser Hinsicht mit der Ausführungsvariante gemäß FIG. 4 auch dadurch gegeben, daß das Sperrglied 5 auch im eingerenkten Zustand der Abdeckung 3 mit einem Vorsprung 33 in die Fassung 6 eingreift und einen für das Einsetzen des Sicherungselementes 4 geeigneten Schlitz 34 aufweist. Auf diese Weise ist die Wand des Sicherungselementes 4 im Sperrglied 5 beidseitig gehalten, so daß sie nicht abgebogen werden kann.

## Patentansprüche

1. Anordnung zum Sichern einer Verbindung zwischen zwei Bauteilen, beispielsweise einer Gehäusewand (1) und einem an dieser anzubringenden Abdeckung (4), dadurch gekennzeichnet, daß ein vorzugsweise zylinderförmiges Sicherungselement (4) vorgesehen ist,

daß an der Abdeckung (3) eine dem Sicherungselement (4) zugeordnete Fassung (6) ausgebildet ist und

daß an der Gehäusewand (1) ein während des Zusammenfügens der beiden Bauteile in die Fassung (6) eingreifendes Sperrglied (5) derart angeformt ist, daß die Fassung (6) erst in der Endstellung der Verbindung für das Einsetzen des Sicherungselementes (4) frei ist.

2. Anordnung nach Anspruch 1,
dadurch gekennzeichnet,
daß für Fassung (6) und Sicherungselement (4) eine Plombiervorrichtung mit einer vorzugsweise zylindrischen Öffnung mit mehreren in die Öffnung hineinragenden Rastnasen (29) und einem mit einer den Rastnasen (29) zugeordneten, umlaufenden Nut (30) versehenen Käppchen Anwendung findet.

3. Anordnung nach Anspruch 1 und 2,
dadurch gekennzeichnet,
daß an der Gehäusewand (1) eine als Sperrglied (5) dienende Rippe ausgebildet ist,

daß ein Vorsprung (33) der Rippe auch in der Endstellung der Verbindung in die Fassung (6) des Sicherungselementes (4) eingreift und

daß das Sperrglied (5) der Wandstärke des Sicherungselementes (4) entsprechend geschlitzt ist (34).

## Claims

1. Arrangement for securing a connection between two components, for example a casing wall (1) and a cover (3) to be attached to the latter, characterised in that a preferably cylindrical securing member (4) is provided, that formed on the cover (3) is a mounting (6) associated with the securing member (4) and that formed on the casing wall (1) is a locking member (5) engaging in the mounting (6) during the assembling of the two components so that the mounting (6) is only free for the insertion of the securing member (4) in the final position of the connection.

2. Arrangement according to Claim 1, characterised in that a sealing device is used for the mounting (6) and securing member (4), the sealing device having a preferably cylindrical opening with several locking lugs (29) projecting into the opening and a small cap provided with a peripheral groove (30) associated with the locking lugs (29).

3. Arrangement according to Claim 1 and 2, characterised in that a rib serving as the locking member (5) is formed on the casing wall (1), that a projection (33) of the rib also engages in the mounting (6) of the securing member (4) in the end position of the connection and that the locking member (5) is slit (34) corresponding to the wall thickness of the securing member (4).

## Revendications

1. Dispositif pour l'immobilisation d'un assemblage entre deux pièces de montage, par exemple, une paroi de boîtier (1) et un dispositif de recouvrement (3) devant être disposé sur cette dernière,
caractérisé par le fait
qu'il est prévu un élément d'immobilisation (4) de préférence cylindrique,
que sur le dispositif de recouvrement (3) est formée une douille (6) associée à l'élément d'immobilisation (4) et
que sur la paroi de boîtier (1) est moulé un élément de blocage (5) s'engageant, pendant l'assemblage des deux pièces de montage, dans la douille (6), de telle sorte que ce n'est que dans la position terminale de l'assemblage que la douille (6) devient disponible pour la mise en place de l'élément d'immobilisation (4).

2. Dispositif selon la revendication 1,
caractérisé par le fait
que pour la douille (6) et l'élément d'immobilisation (4), on utilise un dispositif de plombage avec une ouverture, de préférence cylindrique, avec plusieurs languettes d'arrêt (29) pénétrant dans l'ouverture et un capuchon pourvu d'une rainure (30) circonférentielle associée à l'une des languettes d'arrêt (29).

3. Dispositif selon l'une quelconque des revendications 1 et 2,
caractérisé par le fait
que sur la paroi de boîtier (1) est formée une nervure servant d'élément de blocage (5),
qu'une saillie (33) de la nervure pénètre aussi dans la position terminale de l'assemblage dans la douille (6) de l'élément d'immobilisation (4) et que l'élément de blocage (5) comporte une fente (34) conformément à l'épaisseur de paroi de l'élément d'immobilisation (4).

# FIG. 1

# FIG.3

# FIG.4

FIG. 2